(19) Europäisches Patentamt
European Patent Office
Office européen des brevets

(11) **EP 2 953 045 A1**

(12) **EUROPEAN PATENT APPLICATION**

(43) Date of publication:
**09.12.2015  Bulletin 2015/50**

(51) Int Cl.:
**G06F 21/16** (2013.01)  **G06F 21/55** (2013.01)

(21) Application number: **14305853.5**

(22) Date of filing: **05.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Heen, Olivier**
**35576 Cesson-Sévigné (FR)**
• **Neumann, Christoph**
**35576 Cesson-Sévigné (FR)**
• **Plane, Benjamin**
**35576 Cesson-Sévigné (FR)**
• **Onno, Stéphane**
**35576 Cesson Sévigné (FR)**

(74) Representative: **Browaeys, Jean-Philippe**
**Technicolor**
**1, rue Jeanne d'Arc**
**92443 Issy-les-Moulineaux (FR)**

(54)  **Apparatus and method for data taint tracking**

(57)    A controlled system (110, 120) performs internal taint tracking of data items. When a data item is created, the controlled system computes (202) a name and a taint for the data item and performs (204) an initialization function, thus informing a tracking entity (130) that of the name and data of the data item. The taint is propagated to further data items, while the name may change, and when a data item is exported to (210) or imported from a further device, the controlled system informs (216; 224; 232) the tracking entity (130) of the name and taint of the exported or imported data item as well as its source and destination. A controlled system (110, 120) may request (236) a propagation history from the tracking entity (130). As the tracking entity (130) is shared by more than one controlled system (110, 120), it is possible to perform taint tracking across controlled systems even if these do not use the same taint tracking framework.

Figure 1

**Description**

TECHNICAL FIELD

The present disclosure relates generally to computer systems and in particular to data taint tracking in such systems.

BACKGROUND

This section is intended to introduce to the reader various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

It is well known that digital data can be sensitive for different reasons; it may for example be personal data or company secrets that should be kept secret. A basic example is the following. Alice has written a text file Δ. She sends it to Bob through a drop box and specifies that Δ must not be disclosed to anyone else. Later on, Alice suspects that the file Δ has been disclosed. She would like to know if the file Δ has leaked from her machine or from Bob's machine, from DropBox or from the Amazon EC2 machine (used in current DropBox implementation).

Various solutions have been found in order to combat leaks of such data. These solutions may roughly be divided into two groups: data leak prevention and data leak detection.

Data leak prevention aims at blocking unauthorized data outputs. An exemplary system, Role Base Access Control implemented in Security-Enhanced Linux (SELinux), forbids a many user actions and thus does not apply to all types of users such as users in a home network. Moreover, attackers constantly find ways to evade data despite data leak prevention.

Data leak detection takes as a hypothesis the fact that data will leak. The idea then is to detect and report the data leaks whenever they occur. Data leak detection encompasses a large set of techniques, from data marking to taint tracking, some of which will be described hereafter.

Data marking is based on modification of data to be tracked by adding properties to or watermarking the data. It will be appreciated that the modification may be visible or invisible. The modification may be hard to remove by an attacker as in a robust watermark or easy to remove as in a fragile watermark or unsigned document properties. A typical example is Alice wanting to send a private picture to Bob and Carole. Alice sends a slightly modified version of the picture to Bob and a differently modified version of the picture to Carole. Later, when Alice finds a leaked version of the picture, she may check if the leaked version is Bob's or Carol's version.

There are many limitations to such techniques, which has led to them being deployed in only relatively few cases despite them being known for a long time. A first limitation is that the tracked data and the recipients must be known in advance since the data otherwise cannot be modified for each intended recipient. A second limitation is that the modification must not change the semantics of data, which is not always possible as in the case of binary raw data (e.g. compressed or encrypted data).

Taint tracking (also called taint checking) is a dynamic technique in the sense that any data leak is detected during code execution of a program. Taint tracking associates a taint to data manipulated by the program, for instance input data. Then the taint is propagated to any data that somehow depend on the tainted data, i.e. if data has been generated from tainted data then it is tainted the same way. Thus, when some output data is tainted, this means that this output data somehow depends on an input data with the same taint.

The system that runs the analysed program must be instrumented for taint tracking: it contains a "taint map" that associates taints to objects. So-called fine-grained taint tracking systems like libdft [V. P. Kemerlis, G. Portokalidis, K. Jee, and A. D. Keromytis, "libdft : Practical Dynamic Data Flow Tracking for Commodity Systems," in VEE '12, 2012] and PrivacyScope also called TaintEraser [D. (Yu) Zhu, J. Jung, D. Song, T. Kohno, and D. Wetherall, "TaintEraser: Protecting Sensitive Data Leaks Using Application-Level Taint Tracking," ACM Oper. Syst. Rev., 2011.] that can be built on PIN [see PIN - A Dynamic Binary Instrumentation Tool, Intel Developer Zone] allow tainting at byte level, meaning that the taint map associates taints to each byte of the memory. Other taint tracking systems, like those included in PHP and Ruby programming languages, work on higher level objects such as variables. Coarse-grained taint tracking systems such as TaintDroid and Blare operate on larger objects: memory pages, methods, messages, files, etc.

There are two critical constraints for the taint map. First, the taint map should be secure as an attacker otherwise may tweak the taints and prevent data leak detection. Second the taint map should be semantically sound, meaning that taints (typically sequences of bits) have the same semantic all along the execution.

State-of-art taint tracking solutions satisfy these two constraints in controlled systems: an execution monitored, an instrumented kernel and, more recently, a secure network. However, no solution exists in uncontrolled systems where data is manipulated by non-instrumented systems.

A further technique is information flow tracking, which is a set of static techniques - including flow inference, static analysis and symbolic execution - for program analysis, 'static' meaning that a program is analysed for data leaks before execution. The goal of information flow tracking is to detect the possibility of a leak in a program before it has any chance to execute. If no leak possibility is detected, the program may run without further precautions. Otherwise, the user may forbid the program, or the program may run under a specifically protected mode. When used alone, information flow tracking is for data leak prevention, but when used in conjunction with taint tracking it can improve data leak detection as will be described.

A further solution is implemented in Blare, which uses taint tracking combined with a set of security policies that specify which taints are allowed to flow towards which files/containers (of which the latter can be network interfaces). Blare is coarse-grained and operates at the kernel level. In 2012, Blare was partly extended to secure networks, thus allowing transporting the taints between hosts using the Commercial Internet Protocol Security Option (CIPSO).

The state-of-the-art techniques do not help Alice in the example case. For example, watermarking enables Alice to determine that the copy she sent to Bob has been leaked, but she cannot determine the source of the leak. And data tracking techniques only allow data tracking within systems that are controlled by Alice, but whenever data leave her controlled system, no further information will be generated. Even if Bob agrees to put a taint tracking framework in his system, the state-of-the-art techniques do not allow collaboration between Alice and Bob frameworks. The most that Alice can hope for is information that the file Δ has leaked from a machine in her system.

It can therefore be appreciated that there is a need for a solution that can improve on current taint tracking systems. The present disclosure provides such a solution.

SUMMARY OF DISCLOSURE

In a first aspect, the disclosure is directed to an apparatus for participating in taint tracking with at least a further taint tracking apparatus. The apparatus comprises a processor configured to: generate internal taints for data items; perform taint tracking internally for data items, the taint tracking for a data item comprising propagating an internal taint to at least one further data item; send data items to a further device; and send, for each data item sent to the further device, a name and a taint for the data item to a taint tracking entity.

In a first embodiment, the processor is further configured to send, for each data item sent to the further device, an identifier of the apparatus and an identifier of the further device to the tracking entity.

In a second embodiment, the processor is further configured to receive data items from the further device and send, for each data item received from the further device, a name and a taint for the data item to the taint tracking entity. It is advantageous that the processor is further configured to send, for each data item received from the further device, an identifier of the apparatus and an identifier of the further device to the tracking entity.

In a third embodiment, the name for a data item is an initial internal taint for the data item.

In a fourth embodiment, the taint is obtained using a fingerprinting function. It is advantageous that the fingerprinting function is a hash function, in particular SHA-3.

In a fifth embodiment, the processor is configured to use Blare or Pedigree to perform taint tracking internally.

In a second aspect, the disclosure is directed to a method for taint tracking comprising at a processor of an apparatus: generating a name and a taint for a data item; sending the data item to a further device; sending, for the data item, the name and the taint for the data item to a taint tracking entity.

In a first embodiment, the method further comprises sending, for the data item, an identifier of the apparatus and an identifier of the further device to the tracking entity.

In a second embodiment, the name for the data item is an initial internal taint for the data item.

In a third embodiment, the taint is obtained using a fingerprinting function. It is advantageous that the fingerprinting function is a hash function, in particular SHA-3.

BRIEF DESCRIPTION OF DRAWINGS

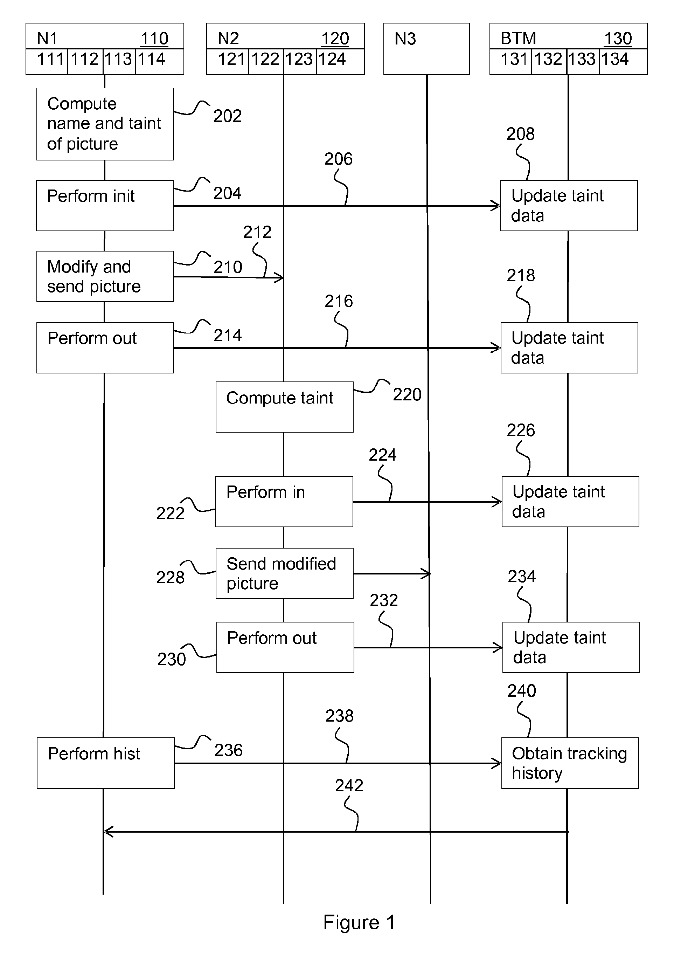

Preferred features of the present disclosure will now be described, by way of non-limiting example, with reference to the accompanying drawings, in which Figure 1 illustrates a system and method of an exemplary embodiment of the present disclosure.

DESCRIPTION OF EMBODIMENTS

Figure 1 illustrates an exemplary system and method of an exemplary embodiment of the present disclosure. The system comprises three systems N1, N2, N3 configured to receive and send data items. Of the three systems, N1 and N2 are controlled, i.e. they implement a taint tracking framework and are configured to communicate taints of certain data items with a tracking entity BTM, as will be further explained hereinafter. The controlled systems N1, N2, as indeed the tracking entity BTM, can be implemented as one or more physical devices which can be any kind of suitable computer or device capable of performing calculations, such as a standard Personal Computer (PC) or workstation. The controlled systems N1, N2 and the tracking entity BTM each preferably comprise at least one hardware processor 111, 121, 131, internal or external memory 112, 122, 132, a user interface 113, 123, 133 for interacting with a user, and a communication interface 114, 124, 134 for interaction with other devices. The skilled person will appreciate that the illustrated devices are very simplified for reasons of clarity and that real devices in addition would comprise features such as persistent storage and internal connections.

It will be appreciated that it may be advantageous to extend data tracking techniques to the case where data may pass through uncontrolled systems. Even a partial extension may bring additional information in case data leak. A big difficulty is the loss of semantics between different controlled systems that are separated by uncontrolled systems (like open networks, cloud systems, etc.). In particular, a taint in a controlled system may have a different meaning in another controlled system.

A system is controlled when it runs a data tracking framework. As discussed in the example case, a data file Δ flows from the host of Alice (controlled) through a set of hosts that implements DropBox (uncontrolled) and then to the host of Bob (controlled). For ease of illustration, it is assumed that the following holds true:

- Each controlled system implements some data tracking framework, like Blare, Pedigree, Privacy Scope, TaintDroid, etc. There is no need that all controlled systems implement the same framework.
- The data that need to be tracked originates from a controlled system.
- The controlled systems agree to report data input and data output. Note that the privacy aspect of reporting input or output is not considered.
- The fingerprinting function fp that is used is such that two items of data Δ and Δ' are considered equal iff fp(Δ)=fp(Δ'). The fingerprinting function fp can for example be the identity function, a cryptographic hash function or a suitable fingerprint relevant to the tracked data, like Scale-Invariant Feature Transform [SIFT; see Lowe, David G. "Distinctive Image Features from Scale-Invariant Keypoints", International Journal of Computer Vision, 60.2 (2004): 91-110] for a digital picture. The fingerprinting function fp preferably has the properties of cryptographic injectivity and unforgeability.

The present system makes use of a new taint map device BTM that:

- keeps track of taint map information for data entering or leaving a plurality of controlled systems,
- conveys a homogenous taint semantic for the plurality of controlled systems, and
- answers requests from devices in the plurality of controlled systems.

Given the BTM and a data item Δ, a (device in a) controlled system E can perform at least the following actions:

init(BTM,Δ,E)    this action informs the BTM that data item Δ is now tracked by the controlled system E.

out(BTM,Δ,E,T)    this action informs the BTM that the controlled system E has detected that data item Δ has been sent (intentionally or leaked) toward a target system T, which may or may not be controlled.

in(BTM,Δ,S,E)    this action informs the BTM that the controlled system E received (or read) data item Δ from source system S, which may or may not be controlled.

hist(BTM,Δ,E)    this action requests the history of data item Δ with respect to system E. The returned history is empty if there is no preceding init(BTM,Δ,E) action. Otherwise, the returned history preferably comprises at least a subset of the full history of actions received by the BTM for data item Δ subsequent to init(BTM,Δ,E).

As for the implementation, in a preferred embodiment:

- The fingerprinting function fp is SHA-3.
- The name of data item Δ is the fingerprint fp(Δ) of the data item Δ.
- The initial taint of data item Δ is the fingerprint fp(Δ).
- The controlled systems use Blare or Pedigree as taint tracking frameworks.

In addition, a redis key-value store is used to store the BTM data and the BTM functions are preferably implemented as follows:

init(BTM,Δ,E)    this action attributes a taint fp(Δ) to data item Δ in the taint tracking framework of E and sends a message to the BTM with parameters system=E, name=fp($\Delta$), taint=fp($\Delta$), state=init, source=none.

out(BTM,$\Delta$,E,T)   if {$t_1$...$t_k$} are the k current taints of data item $\Delta$ in the taint tracking framework of E, this action sends k messages (i.e. one message per current taint) to the BTM with the following parameters system=E, name=fp($\Delta$), taint=$t_i$, state=out, dest=T.

in(BTM,$\Delta$,S,E)   upon reception of data item $\Delta$ in controlled system E this action attributes the taint fp($\Delta$) to $\Delta$ in the taint tracking framework of E and sends a message to the BTM with the parameters system=E, name=fp($\Delta$), taint=fp($\Delta$), state=init, source=S. It will be noted that a difference compared to init is that the source is set to S instead of none.

hist(BTM,$\Delta$,E)   this action first sends a request to the BTM. The BTM searches for stored previous messages with system=E, name=fp($\Delta$), taint=fp($\Delta$), state=init (source is left unspecified). If no such message is found, the answer is the empty set. If at least one message is found, the BTM chooses the oldest message (in the preferred embodiment) and recursively searches for subsequent messages with either (state=out and taint=fp($\Delta$)) or (state=init and name=fp($\Delta$)). Any found names and taints are used in subsequent recursive searches until no new name and no new taint is found. The result is the subtree of all collected values, with the link between taints and names corresponding to the links in the BTM.

The skilled person will appreciate that the implementation of hist(BTM,$\Delta$,E) can also be expressed as the transitive closure of the two relations taint->name and name->taint induced by the BTM, under the condition that a message with system=E, name=fp($\Delta$), taint=fp($\Delta$), state=init exists.

Figure 1 illustrates an exemplary use of the present disclosure in which a first collaborative node N1, storing a picture $\Delta$, sends a modified picture G($\Delta$) to another collaborative node N2, which in turn sends the same modified picture G($\Delta$) to a non-collaborative node N3.

N1 computes the name=fp($\Delta$) of the picture $\Delta$ and the corresponding taint t($\Delta$)=fp($\Delta$), step 202. N1 then performs, step 204, init with the proper parameters: init(BTM, name($\Delta$), t($\Delta$)), which causes a message to be sent, step 206, to the BTM that updates, step 208, the stored taint data for the picture $\Delta$. Since the name and the taint are identical, Init can be performed with just one of these variables. The taint data then is as follows:

| Entry | Name | Source | Destination | Taint | Type |
|-------|------|--------|-------------|-------|------|
| **1** | **fp($\Delta$)** | **N1** | **N1** | **fp($\Delta$)** | **Init** |

N1 then generates, step 210, the modified picture G($\Delta$) (e.g. a black-and-white or a cropped version of the original picture $\Delta$). N1's local data tracking framework gives the modified picture G($\Delta$) the same taint as the original picture $\Delta$, since the taint of the latter is propagated to the former. N1 then sends the modified picture G($\Delta$) to N2, step 212. N1 then performs out(BTM, name(G($\Delta$)), t($\Delta$), N1, N2), step 214, which causes a message to be sent, step 216, to the BTM that updates, step 218, the stored taint data for the picture $\Delta$. The taint data then is as follows:

| Entry | Name | Source | Destination | Taint | Type |
|-------|------|--------|-------------|-------|------|
| 1 | fp($\Delta$) | N1 | N1 | fp($\Delta$) | Init |
| **2** | **fp(G($\Delta$))** | **N1** | **N2** | **fp($\Delta$)** | **Out** |

N2 receives the message with the modified picture G($\Delta$), computes a name and a taint t(G($\Delta$)), step 220, and performs in(BTM, name(G($\Delta$)), t($\Delta$), N1, N2), step 222, which causes a message to be sent, step 224, to the BTM that updates, step 226, the stored the taint data. The taint data then is as follows:

| Entry | Name | Source | Destination | Taint | Type |
|-------|------|--------|-------------|-------|------|
| 1 | fp($\Delta$) | N1 | N1 | fp($\Delta$) | Init |
| 2 | fp(G($\Delta$)) | N1 | N2 | fp($\Delta$) | Out |
| **3** | **fp(G($\Delta$))** | **N1** | **N2** | **fp(G($\Delta$))** | **In** |

N2 then sends the modified picture G($\Delta$) to N3, step 228, and performs out(BTM, name(G($\Delta$)), t(G($\Delta$)), N2, N3), step 230, which causes a message to be sent, step 232, to the BTM that updates, step 234, the stored the taint data for the picture $\Delta$. The taint data then is as follows:

| Entry | Name | Source | Destination | Taint | Type |
|---|---|---|---|---|---|
| 1 | fp($\Delta$) | N1 | N1 | fp($\Delta$) | Init |
| 2 | fp(G($\Delta$)) | N1 | N2 | fp($\Delta$) | Out |
| 3 | fp(G($\Delta$)) | N1 | N2 | fp(G($\Delta$)) | In |
| **4** | **fp(G($\Delta$))** | **N2** | **N3** | **fp(G($\Delta$))** | **Out** |

N1 the performs the action hist(BTM, Name($\Delta$)), step 236, which causes a request message to be sent, step 238, to the BTM that obtains, step 240, the tracking history for the picture whose name is name($\Delta$) and sends a message, step 242, to N1. The result is "N1 $\rightarrow$N2; N2$\rightarrow$N3"; in other words, the picture was sent from N1 to N2 and then from N2 to N3.

In a similar manner, N2 can obtain the history N2->N3 by sending a request hist(BTM,Name(G($\Delta$)). However, without the knowledge of Name($\Delta$), N2 cannot obtain the history starting from N1.

It will be appreciated that the same value fp($\Delta$) is used for both the name and the initial taint of data item $\Delta$. This choice can allow the linking of names to taints and vice-versa in order to retrieve more history information.

It will also be appreciated that the size of a SHA-3 hash value can be 256 bits, which can require an adaptation since most existing taint tracking frameworks do not provide 256 bits for taints. The preferred adaptation is to patch the framework in order to allow taints with sufficiently many bits. An alternative adaptation is to truncate the SHA-3 hash value to the maximum number of bits allowed in the unmodified tainting system (64 bits for Pedigree, 26.6 bits for Blare) and to truncate the fingerprint equality check accordingly.

It will further be appreciated that in the preferred embodiment the controlled systems are not required to authenticate themselves to the BTM. The controlled system E may use a pseudonym as an identity: an IP address, a Fully Qualified Domain Name (FQDN) or any nickname. The only requirement is that if controlled system E wants consistent histories then its pseudonym should not change over time. Otherwise, controlled system E will start a new history with its new pseudonym.

Further, as fp($\Delta$) is used as both the initial name and the initial taint, knowledge of fp($\Delta$) is required for making history request to the BTM. A controlled system that gets data item $\Delta$ can easily compute fp($\Delta$), but systems - controlled or not - without access to data item $\Delta$ cannot compute fp($\Delta$).

On another note, a well-known drawback when using taint tracking is overtraining: after sufficient propagation of taints there is a risk that every single file of the system ends-up being tainted, which can make taint analysis meaningless. For instance, after using GIMP (Gnu Image Manipulation Program) on a tainted picture P, every single picture is tainted because the taint of the picture P is propagated to the GIMP process; it is normally useless to include these other pictures within the "story" of P.

There is thus a need to declassify files, i.e. to remove the taint of a considered file, in order to avoid useless propagation toward certain files. A preferred local declassification function gives the right to the user to discard certain tainted files that are deemed to be useless and may be expressed as a recursive function:

$$T = set\ of\ taints, D = set\ of\ devices, \forall n > 0, \forall t \in T, \forall d \in D$$

$$declassify^n(d,t) = declassify^{n-1}(d,t)[0] \bigcup declassify^{n-1}(d,t)[1] \bigcup \ldots$$

The function $declassify^0(d, t)$ returns the name of each device that received the tainted data t (t $\equiv$ taint $\equiv$ name of the data) one day, and names of derivative files, i.e. files tainted with t but that are not t. It is possible to run the local declassification function up to n-level: each time the user is asked if concerned taints are to be discarded.

The present disclosure can find direct application in home networks and personal data privacy.

The disclosure can allow traitor tracing that is different from the traditional fingerprint / watermarking approach. In particular, the disclosure can allow traitor tracing on data that are difficult to watermark: encrypted or compressed data, bit encoded data including web application traffic, raw network packets, text documents including source code, etc.

The disclosure can also allow a form of mediametry (i.e. audience measurement). A controlled system E may taint a data item $\Delta$ and voluntarily leak (i.e. send) the data item $\Delta$ to many recipients. Upon receiving this file, uncontrolled system will report nothing, but controlled systems will report to the BTM with the action in(BTM,$\Delta$,E,). If enough honest controlled system are deployed this provides a mediametry source.

It will be appreciated that the present disclosure can provide taint tracking between different controlled systems.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1. An apparatus (110) for participating in taint tracking with at least a further taint tracking apparatus (120), the apparatus (110) comprising:

   a processor (111) configured to:

   generate internal taints for data items;
   perform taint tracking internally for data items, the taint tracking for a data item comprising propagating an internal taint to at least one further data item;
   send data items to a further device; and
   send, for each data item sent to the further device, a name and a taint for the data item to a taint tracking entity (130).

2. The apparatus of claim 1, wherein the processor is further configured to send, for each data item sent to the further device, an identifier of the apparatus (110) and an identifier of the further device (120) to the tracking entity.

3. The apparatus of claim 1, wherein the processor is further configured to receive data items from the further device and send, for each data item received from the further device, a name and a taint for the data item to the taint tracking entity (130).

4. The apparatus of claim 3, wherein the processor is further configured to send, for each data item received from the further device, an identifier of the apparatus (110) and an identifier of the further device (120) to the tracking entity.

5. The apparatus of claim 1, wherein the name for a data item is an initial internal taint for the data item.

6. The apparatus of claim 1, wherein the taint is obtained using a fingerprinting function.

7. The apparatus of claim 6, wherein the fingerprinting function is a hash function.

8. The apparatus of claim 7, wherein the hash function is SHA-3.

9. The apparatus of claim 1, wherein the processor is configured to use Blare or Pedigree to perform taint tracking internally.

10. A method for taint tracking comprising at a processor (111) of an apparatus (110):

    generate a name and a taint for a data item;
    send the data item to a further device;
    send, for the data item, the name and the taint for the data item to a taint tracking entity (130).

11. The method of claim 10, further comprising sending, for the data item, an identifier of the apparatus (110) and an identifier of the further device (120) to the tracking entity.

12. The method of claim 10, wherein the name for the data item is an initial internal taint for the data item.

13. The method of claim 10, wherein the taint is obtained using a fingerprinting function.

14. The method of claim 13, wherein the fingerprinting function is a hash function.

15. The method of claim 14, wherein the hash function is SHA-3.

Figure 1

Europäisches
Patentamt

European
Patent Office

Office européen
des brevets

**EUROPEAN SEARCH REPORT**

Application Number

EP 14 30 5853

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Yogesh Mundada ET AL: "Practical Data-Leak Prevention for Legacy Applications in Enterprise Networks", <br><br> 31 December 2011 (2011-12-31), XP055134726, Retrieved from the Internet: URL:https://smartech.gatech.edu/bitstream/handle/1853/36612/GT-CS-11-01.pdf [retrieved on 2014-08-14] | 1-5,9-12 | INV.<br>G06F21/16<br>G06F21/55 |
| Y | * figure 2 * <br> * Section 3.1; paragraph [0001] - paragraph [0002] * <br> * Section 3.2 * <br> * Section 4.1 * <br> * Section 4.2 * <br> ----- | 6-8, 13-15 | |
| Y | Anirudh Ramachandran ET AL: "Securing Enterprise Networks Using Traffic Tainting", SIGCOMM 2009, 21 August 2009 (2009-08-21), XP055134720, Retrieved from the Internet: URL:http://www.cc.gatech.edu/grads/y/yogeshm3/sigcomm-pd-2009-final75.pdf [retrieved on 2014-08-14] | 6-8, 13-15 | |
| A | * Section 2.1, Section 3 * <br> ----- | 1-5,9-12 | |

TECHNICAL FIELDS
SEARCHED (IPC)

G06F

The present search report has been drawn up for all claims

| Place of search | Date of completion of the search | Examiner |
|---|---|---|
| Munich | 18 August 2014 | Dobre, Dan |

EPO FORM 1503 03.82 (P04C01)

**REFERENCES CITED IN THE DESCRIPTION**

**Non-patent literature cited in the description**

- **V. P. KEMERLIS ; G. PORTOKALIDIS ; K. JEE ; A. D. KEROMYTIS.** libdft : Practical Dynamic Data Flow Tracking for Commodity Systems. *VEE '12,* 2012
- **D. (YU) ZHU ; J. JUNG ; D. SONG ; T. KOHNO ; D. WETHERALL.** TaintEraser: Protecting Sensitive Data Leaks Using Application-Level Taint Tracking. *ACM Oper. Syst. Rev.,* 2011

- PIN - A Dynamic Binary Instrumentation Tool. *Intel Developer Zone*
- **LOWE, DAVID G.** Distinctive Image Features from Scale-Invariant Keypoints. *International Journal of Computer Vision,* 2004, vol. 60.2, 91-110